# EUROPEAN PATENT SPECIFICATION

(11) **EP 2 936 973 B1**
(45) Date of publication and mention of the grant of the patent: **12.10.2016**
(21) Application number: 15164534.8
(22) Date of filing: 21.04.2015
(51) Int. Cl.: A01G 17/08

(54) **AUTOMATIC WIRE TYING MACHINE**
AUTOMATISCHE DRAHTBINDEMASCHINE
MACHINE DE POSE AUTOMATIQUE DE LIENS TORSADES

(30) Priority: 22.04.2014 IT PD20140109
(43) Date of publication of application: 28.10.2015
(73) Proprietor: Zanon S.R.L., 35011 Campodarsego PD (IT)
(72) Inventor: Zanon, Franco, 35011 Campodarsego PD (IT)
(74) Representative: Modiano, Micaela Nadia

(56) References cited:
- EP-A1- 0 763 323
- EP-A1- 1 322 148

## Description

The present invention relates to a mechanism for an automatic wire tying machine.

In fields such as viticulture and floriculture, as well as for fruit plants and vegetable crops, it is often necessary to secure the plants or branches to adapted supports in order to guide their growth.

Tying is currently performed with ties to be applied entirely manually or by means of adapted manual or automatic applicators.

Automatic wire tying machines allow to reduce substantially the tying times, thus improving productivity, and are also the simplest and easiest to use, being motorized and fed continuously with a wire that is cut and tied automatically and in a controlled manner.

Automatic wire tying machines are known which use a single motor or two motors to guide the wire around the items to be tied, cut it into a tie and twist together its ends in order to fasten the two items. These operations are performed by way of the actuation, by means of the motor or the two motors, of adapted means for guiding the wire along the apparatus, of suitable means for cutting the wire into a tie and of means for twisting the ends of the latter.

Very often the wire is pushed or drawn through a hook-shaped tilting guide, or a curved slot to be closed onto itself to surround the two items around which it has to be tied.

These apparatus solutions suffer a drawback in that the mechanisms necessary in order to perform the tying operations are very often complex and the motors very often are unable to supply enough power to move a plurality of components.

For example, in a solution with two motors, such as the one disclosed in EP 1322148, a first motor is preset to push the flexible wire along a curved slot to be closed onto itself to surround the items and also closes and opens the slot, while a second motor actuates a twister and guides a device for cutting the wire.

The aim of the present invention is to provide a mechanism for automatic wire tying machines that allows to reduce the operations that affect the motors installed in the apparatus.

Within this aim, an object of the invention is to simplify the internal mechanisms of automatic wire tying machines.

In accordance with the invention, there is provided a automatic wire tying machine as defined in the appended claims.

Further characteristics and advantages of the invention will become better apparent from the description of a preferred but not exclusive embodiment of the mechanism according to the invention, illustrated by way of non-limiting example in the accompanying drawings, wherein:
Figure 1 is a partially sectional perspective view of a mechanism according to the invention installed in an automatic wire tying machine during a step of use thereof;
Figure 2 is a view, similar to Figure 1, of the mechanism according to the invention, during another step of use of the automatic wire tying machine;
Figure 3 is another perspective view of a detail of the mechanism, shown in enlarged scale;
Figure 4 is a view of a single component of the mechanism according to the invention;
Figure 5 is a view of an alternative version of the detail of Figure 3.

With reference to the figures, the mechanism according to the invention is designated generally by the reference numeral 10.

The first two figures show the mechanism according to the invention installed within an automatic wire tying machine 11 for which it has been developed, without the outer enclosure in order to make the mechanism 10 visible.

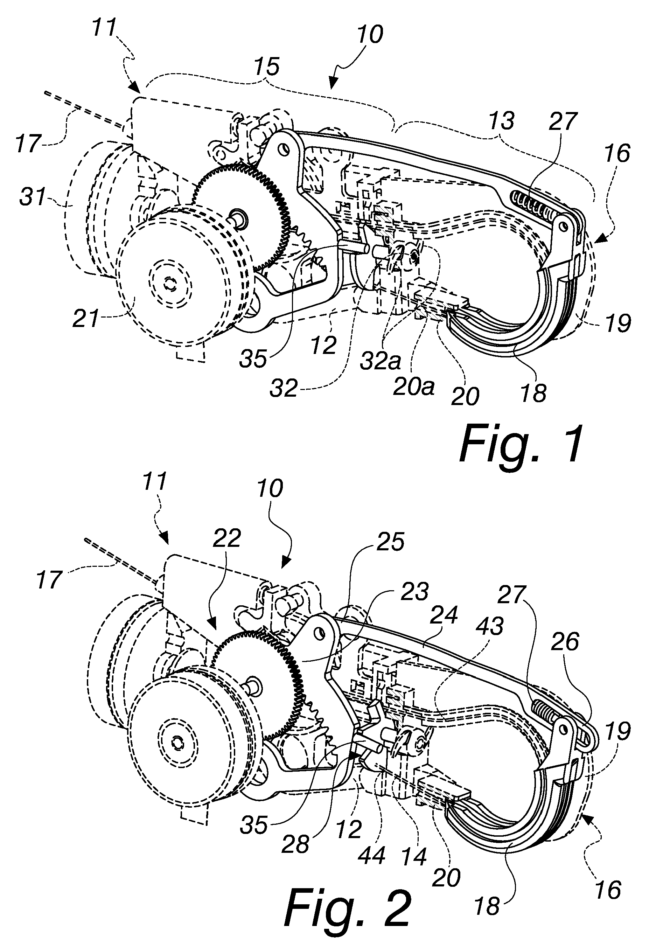

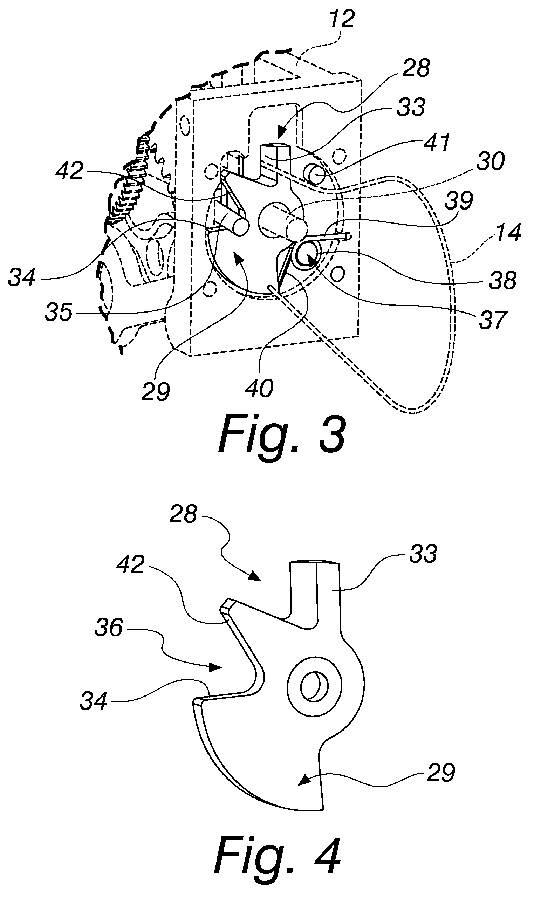

The automatic wire tying machine 11 comprises, on a frame-like supporting body 12, a front portion 13, at which a tie 14, shown in Figure 2 and Figure 3, is tied around two items to be tied together, such, for example, a shoot with a prop, and a rear portion 15, where part of the mechanisms for moving the movable parts and the corresponding motors is installed.

At the front portion 13 there is a hook-shaped guide 16, which is open inwardly to carry a flexible wire 17, of which the tie 14 is the portion that occupies it following the cutting of the wire, and the mechanism 10 comprises a movable end portion 18 of the hook-shaped guide 16, which is preset to rotate with respect to a fixed portion 19 in order to close on an abutment element 20 so as to surround the items to be tied.

The automatic wire tying machine 11 also comprises, at its rear portion 15, three motors, of which a motor 21, hereinafter termed first motor 21, for moving the hook-shaped guide 16. The first motor 21 is arranged on one side of the apparatus and is clearly visible in the perspective views.

A second motor, not visible in the figures, is installed on the opposite side with respect to the previous one in order to move continuously the flexible wire 17 from a magazine in succession along the rear portion 15, along the hook-shaped guide 16 and along the abutment element 20, when the movable portion 18 is closed on the latter.

The abutment element 20 has a groove 20a, which is visible in the first two figures by way of the partially sectional view with which it is shown, and is open from above for the extraction of the tie 14.

As also clearly visible in the first two figures, the mechanism 10 occupies partially the front portion 13 and partially the rear portion 15. The movable portion 18 is in fact moved by means of the kinematic system 22 activated by the first motor 21. It comprises a series of gears, a rack 23 and a linkage 24, which is connected thereto with a first end 25 and to said movable portion 18 with an opposite second end 26 at a compensation spring 27. The latter can be compressed after the closure of the movable portion 18 on the abutment element 20 during a rotation arc of the rack 23 with which it is preset to activate means 28 for cutting the flexible wire 17 that separate from it the tie 14 to be tied around the items.

The first motor 21 is indirectly preset also to activate the cutting means 28.

The cutting means 28 comprise a flat body 29, which is clearly visible in its assembly to the rest of the automatic wire tying machine 11 in the illustration of Figure 3 and is also shown individually in Figure 4.

The flat body 29, which is conveniently perforated, is mounted on a shaft 30, preset to transmit rotation from a third motor 31, arranged on the rear of the automatic wire tying machine 11, to a twister 32 keyed on the shaft 30 and conveniently provided with arms 32a for drawing the end portions of the tie 14.

The cutting means 28 comprise a blade 33 that rotates on a plane that is transverse to the flexible wire 17 and a first lever arm 34 that is integral therewith and on which a pin 35 that is integral with the rack 23 is intended to act with a lever-like action during the activation of the cutting means 28.

The rotating blade 33 is thus pivoted on the shaft 30 and the flat body 29 has a V-shaped recess 36 that defines, on one of its sides, the first lever arm 34, on which the pin 35 is adapted to push.

The two subsequent steps, at the beginning and at the end of the rotation arc of the rack 23, which causes the rotation of the pin 35 on the flat body 29, are shown in Figure 1 and Figure 2.

Figure 3, which shows the manner in which the cutting means 28 are installed, also allows to note that they are coupled to means 37 for the elastic return of the flat body 29 by opposite rotation to the position that precedes cutting.

In particular, the elastic return means 37 consist of a helical spring 38, which is pivoted in an offset position to the shaft 30 and has two end arms, of which a first end arm 39 is interlocked with the supporting body 12 and a second end arm 40 pushes against a side of the flat body 29 so as to oppose its rotation.

A stroke limiter 41 for the opposite rotation of the flat body 29 is also present and consists substantially of a protrusion on which the rotating blade 33 is adapted to be blocked during opposite rotation.

Moreover, the V-shaped recess 36 defines, with its contiguous walls, the first lever arm 34 and also a second lever arm 42 for the pin 35, which activates the opposite rotation of the flat body 29 following the opposite rotation of the rack 23.

According to a possible variation, the cutting means 28 are coupled to retraction means 137 (as a replacement of the elastic return means) for the flat body 29 by opposite rotation to the position that precedes cutting.

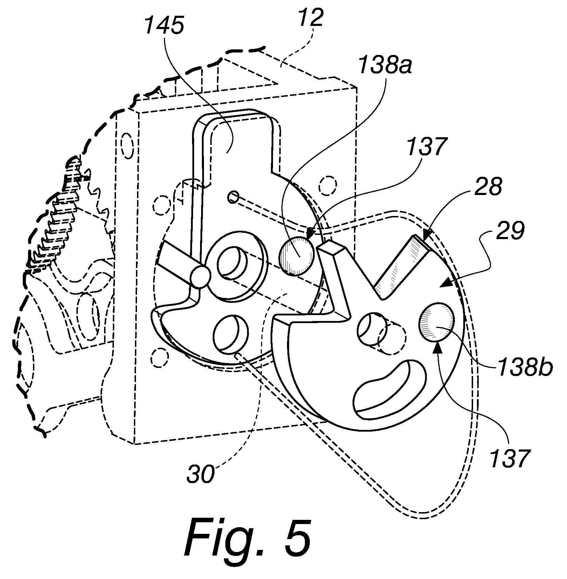

These retraction means 137 are shown in Figure 5 and consist of a pair of magnets 138a and 138b, the first of which 138a is integral with the supporting body 12, to the rear of the flat body 29, while the second magnet 138b is integral with the latter, being installed thereon, and faces the first magnet 138a in the position that precedes cutting.

The first magnet 138a is installed preferably on a supporting element 145 that is integral with the supporting body 12 and is mounted on the shaft 30, to the rear of the flat body 29.

As shown, with said retraction means 137 the stroke limiter may be omitted.

The twister 32 is installed upstream of the cutting means 28, with respect to the movement direction of the flexible wire 17 from the rear portion 15 to the front portion 13, in order to twist a first portion 43 of a tie 14, downstream of the rear portion 15, with a last portion 44 of the tie 14 guided by the abutment element 20.

Operation of the mechanism according to the invention is as follows.

The automatic wire tying machine 11 is arranged with the hook-shaped guide 16 around the items to be tied, i.e., for example in the case of viticulture, the shoot and the prop.

Upon actuation, the first motor 21 turns the movable portion 18 until it abuts against the abutment element 20, surrounding the two items to be tied.

During this step, the first motor 21 activates the gears and therefore the rack 23 connected thereto. The rotation of the rack 23 causes the movement of the linkage 24, which turns the movable portion 18. The movable portion 18 cannot rotate further and the compensation spring 27 is not compressed in this step.

The second motor then moves the flexible wire 17 from the magazine through the rear portion 15, where adapted means draw it and stretch it, up to the front portion 13 along the hook-shaped guide 16, passing on the fixed portion 19 and on the movable portion 18, which guides it up to the abutment element 20, where it passes in the groove 20a.

From the moment when the movable portion 18 abuts, the pin 35 is in the V-shaped recess 36, on the first lever arm 34, in the manner shown in Figure 1.

With a last rotation arc of the rack 23, the pin 35 that is integral therewith pushes the first lever arm 34, downwardly with respect to what is shown, causing the rotation, counterclockwise for an observer who looks at the automatic wire tying machine 11 from the front part, of the rotating blade 33 on a plane that is transverse to the flexible wire 17 and to the shaft 30.

In this manner, the rotating blade 33 cuts the flexible wire 17 upstream of the twister 32, in the part that exits from the rear portion 15, separating from the remainder of the flexible wire 17 the tie 14 that must be twisted at the ends in order to fasten the two items to be tied.

In the last rotation arc of the rack 23, the linkage 24 is subjected to a further translation, which since it cannot be transmitted in rotation to the movable portion 18 that has already abutted, is compensated with the compression of the compensation spring 27.

After the twisting of the first portion 43 of the tie 14 with the last portion 44, following the activation of the twister 32 by means of the third motor 31, the tie 14 is extracted from the front portion 13 of the automatic wire tying machine 11.

The front portion 13 is then opened again by means of the mechanism 10.

The rack 23 moves in opposite rotation, i.e., in the opposite direction with respect to the preceding one, causing the lifting of the pin 35, which pushes on the second lever arm 42, causing an opposite rotation of the flat body 29 as well. The rotating blade 33 is then returned to the initial position.

The opposite rotation is conveniently limited by the stroke limiter 41, against which the rotating blade 33 abuts with the side that lies opposite the cutting side.

Opposite rotation is facilitated by the means 37 for the elastic return of the flat body 29 to the position that precedes cutting.

In the variation shown in Figure 5, opposite rotation is instead facilitated by the retraction of the retraction means 137, i.e., by the retraction performed by the first magnet 138a on the second magnet 138b, causing the opposite rotation of the flat body 29.

During the rotation of the rack 23 according to a first return arc, in the opposite direction with respect to the preceding one, the linkage 24 translates in the opposite direction with respect to the preceding one for a first extent that is equal to the elongation of the compensation spring 27, which extends again to its original length.

The rack 23 then continues in its opposite rotation until the automatic wire tying machine 11 is completely open and thus ready for another tying cycle.

Thanks to the proposed mechanism solution, it is thus possible to perform the step for cutting the flexible wire 17 by using the power supplied by the first motor 21 to close the movable portion 18.

This operation therefore requires neither additional motors nor a resizing of the first motor 21. The first motor 21 is in fact sized for performing only the operation for closing and opening the movable portion 18.

The mechanism 10 allows to activate the rotation of the rotating blade 33 at the appropriate time, i.e., after the closing of the hook-shaped guide 16 on the abutment element 20, carrying the flexible wire 17, and simply with a further rotation arc imposed to the rack 23.

Moreover, the same mechanism 10 is also capable of ensuring the return of the rotating blade 33 to the initial position, again without a dedicated motor. Simple provisions allow to impose and limit the opposite rotation, i.e., the presence of the elastic return means 37 and of the stroke limiter 41 or the presence of the retraction means 137.

In practice it has been found that the invention achieves the intended aim and objects, by providing a mechanism for automatic wire tying machines that allows to reduce the operations that affect the motors installed therein and that is simpler than the internal mechanisms of many currently known automatic wire tying machines.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An automatic wire tying machine (11) with a mechanism (10) comprising, on a supporting body (12) of said automatic wire tying machine (11), a movable end portion (18) of a hook-shaped guide (16), which is open inwardly to carry a flexible wire (17), to be closed on an abutment element (20) so as to surround the items to be tied, wherein said movable end portion (18) is moved by means of a kinematic system (22) that is activated by a motor (21), **characterized in that** said kinematic system comprises a rack (23) and a linkage (24), which is connected thereto with a first end (25) and to said movable end portion (18) with an opposite second end (26) at a compensation spring (27) that can be compressed after the closure of said movable end portion (18) on said abutment element (20) during a rotation arc of said rack (23) with which it is intended to activate cutting means (28) for cutting said flexible wire (17) that separate a tie (14) thereof to be tied around said items.

2. The automatic wire tying machine (11) with the mechanism (10) according to claim 1, **characterized in that** said cutting means (28) comprise a blade (33) that rotates on a plane that is transverse to said flexible wire (17) and a first lever arm (34) that is integral therewith and on which a pin (35) that is integral with said rack (23) is intended to act with a lever-like action during the activation of said cutting means (28).

3. The automatic wire tying machine (11) with the mechanism (10) according to claim 2, **characterized in that** said cutting means (28) comprise a flat body (29), which is mounted on a shaft (30) and is arranged transversely to said pin (35) and has said rotating blade (33) pivoted on said shaft (30) and a V-shaped recess (36) that defines, on one of its sides, said first lever arm (34), on which said pin (35) is adapted to push.

4. The automatic wire tying machine (11) with the mechanism (10) according to claim 3, **characterized in that** said cutting means (28) are coupled to means (37) for the elastic return of said flat body (29) by opposite rotation in the position that precedes cutting.

5. The automatic wire tying machine (11) with the mechanism (10) according to claim 4, **characterized in that** it comprises stroke limiters (41) for the opposite rotation of said flat body (29).

6. The automatic wire tying machine (11) with the mechanism (10) according to claim 3, **characterized in that** said V-shaped recess (36) defines, with its walls, said first lever arm (34) and a second lever arm (42) for said pin (35), which activates the opposite rotation of said flat body (29) as a consequence of the opposite rotation of said rack (23).

7. The automatic wire tying machine (11) with the mechanism (10) according to claim 3, **characterized in that** said cutting means (28) are coupled to means (137) for retracting said flat body (29) by opposite rotation to the position that precedes cutting.

## Patentansprüche

1. Automatische Drahtbindemaschine (11) mit einem Mechanismus (10), umfassend auf einem tragenden Körper (12) der genannten automatischen Drahtbindemaschine (11) einen beweglichen Endteil (18) einer hakenförmigen Führung (16), welche nach innen offen ist, um einen flexiblen Draht (17) zu tragen, welches Endstück an ein Begrenzungselement (20) anstößt, um so die zu bindenden Objekte zu umgeben, wobei der bewegliche Endteil (18) mittels eines kinematischen Systems (22) bewegt wird, welches durch einen Motor (21) aktiviert wird, **dadurch gekennzeichnet, dass** das kinematische System eine Zahnstange (23) und ein Verbindungsstück (24) umfasst, welches damit an einem ersten Ende (25) und mit dem genannten beweglichen Endteil (18) an einem gegenüberliegenden zweiten Ende (26) über eine Ausgleichsfeder (27) verbunden ist, die nach dem Anstoßen des genannten beweglichen Endteils (18) an dem genannten Begrenzungselement (20) während eines Drehungsbogens der genannten Zahnstange (23) komprimiert werden kann, um ein Schneidemittel (28) zum Schneiden des genannten flexiblen Drahtes (17) zu aktivieren, um davon ein Bindungsstück (14) abzutrennen, das um die genannten Objekte gebunden wird.

2. Automatische Drahtbindemaschine (11) mit dem Mechanismus (10) nach Anspruch 1, **dadurch gekennzeichnet, dass** das genannte Schneidemittel (28) eine Schneide (33), welche sich in einer Ebene dreht, die quer zum genannten flexiblen Draht (17) verläuft, und einen ersten Hebelarm (34) umfasst, der darin integriert ist und auf welchen ein Stift (35), der in die genannte Zahnstange (23) integriert ist, mit einer hebelartigen Wirkung während der Betätigung des genannten Schneidemittels (28) einwirkt.

3. Automatische Drahtbindemaschine (11) mit dem Mechanismus (10) nach Anspruch 2, **dadurch gekennzeichnet, dass** das genannte Schneidemittel (28) einen flachen Körper (29) umfasst, welcher auf einer Achse (30) montiert ist und zum genannten Stift (35) quer verläuft und die genannte rotierende Schneide (33) auf der genannten Achse (30) drehbar gelagert hat und eine V-förmige Aussparung (36) aufweist, welche auf einer ihrer Seiten den ersten Hebelarm (34) definiert, auf welchen der genannte Stift (35) drückt.

4. Automatische Drahtbindemaschine (11) mit dem Mechanismus (10) nach Anspruch 3, **dadurch gekennzeichnet, dass** das genannte Schneidemittel (28) an ein Mittel (37) für die elastische Rückführung des genannten flachen Körpers (29) durch eine entgegengesetzte Drehung in die Position, welche dem Schneiden vorangeht, gekoppelt ist.

5. Automatische Drahtbindemaschine (11) mit dem Mechanismus (10) nach Anspruch 4, **dadurch gekennzeichnet, dass** sie Hubbegrenzungen (41) für die entgegengesetzte Drehung des genannten flachen Körpers (29) umfasst.

6. Automatische Drahtbindemaschine (11) mit dem Mechanismus (10) nach Anspruch 3, **dadurch gekennzeichnet, dass** die genannte V-förmige Aussparung (36) mit ihren Wänden den genannten ersten Hebelarm (34) und einen zweiten Hebelarm (42) für den genannten Stift (35) definiert, welcher die entgegengesetzte Drehung des genannten flachen Körpers (29) infolge der gegenläufigen Drehung der genannten Zahnstange (23) aktiviert.

7. Automatische Drahtbindemaschine (11) mit dem Mechanismus (10) nach Anspruch 3, **dadurch gekennzeichnet, dass** das genannte Schneidemittel (28) an ein Mittel (137) zum Zurückziehen des genannten flachen Körpers (29) durch eine entgegengesetzte Drehung in die Stellung, welche der Schneidestellung vorangeht, gekoppelt ist.

## Revendications

1. Machine automatique pour nouer des fils (11) avec un mécanisme (10) comprenant, sur un corps de support (12) de ladite machine automatique pour nouer des fils (11), une partie d'extrémité mobile (18) d'un guide en forme de crochet (16), qui est ouverte vers l'intérieur pour porter un fil souple (17), à fermer sur un élément de butée (20) afin d'entourer les articles à attacher, dans laquelle :
ladite partie d'extrémité mobile (18) est déplacée au moyen d'un système cinématique (22) qui est activé par un moteur (21) **caractérisée en ce que** ledit système cinématique comprend un crémaillère (23) et une liaison (24) qui est raccordée à cette dernière avec une première extrémité (25) et à ladite partie d'extrémité mobile (18) avec une seconde extrémité opposée (26) au niveau d'un ressort de compensation (27) qui peut être comprimé après la fermeture de ladite partie d'extrémité mobile (18) sur ledit élément de butée (20) pendant un arc de rotation de ladite crémaillère (23) avec lequel il doit activer des moyens de coupe (28) pour couper ledit fil flexible (17) qui sépare son noeud (14) à nouer autour desdits articles.

2. Machine automatique pour nouer des fils (11) avec le mécanisme (10) selon la revendication 1, **caractérisée en ce que** lesdits moyens de coupe (28) comprennent une lame rotative (33) qui tourne sur un plan transversal par rapport audit fil flexible (17) et un premier bras de levier (34) solidaire de ce dernier et sur lequel une broche (35) solidaire de ladite crémaillère (23), est prévue pour agir avec une action de levier pendant l'activation desdits moyens de coupe (28).

3. Machine automatique pour nouer des fils (11) avec le mécanisme (10) selon la revendication 2, **caractérisée en ce que** lesdits moyens de coupe (28) comprennent un corps plat (29) qui est monté sur un arbre (30), est agencé de manière transversale par rapport à ladite broche (35) et a ladite lame rotative (33) qui est pivotée sur ledit arbre (30) et un évidement en forme de V (36) qui définit, sur l'un de ses côtés, ledit premier bras de levier (34) sur lequel ladite broche (35) est adaptée pour pousser.

4. Machine automatique pour nouer des fils (11) avec le mécanisme (10) selon la revendication 3, **caractérisée en ce que** lesdits moyens de coupe (28) sont couplés à des moyens (37) de retour élastique par rotation opposée dudit corps plat (29) dans la position qui précède la coupe.

5. Machine automatique pour nouer des fils (11) avec le mécanisme (10) selon la revendication 4, **caractérisée en ce qu'**elle comprend des limiteurs de course (41) pour la rotation opposée dudit corps plat (29).

6. Machine automatique pour nouer des fils (11) avec le mécanisme (10) selon la revendication 3, **caractérisée en ce que** ledit évidement en forme de V (36) définit, avec ses parois, ledit premier bras de levier (34) et un second bras de levier (42) pour ladite broche (35), qui active la rotation opposée dudit corps plat (29), en conséquence de la rotation opposée de ladite crémaillère (23).

7. Machine automatique pour nouer des fils (11) avec le mécanisme (10) selon la revendication 3, **caractérisée en ce que** lesdits moyens de coupe (28) sont couplés à des moyens (137) pour rétracter par rotation opposée ledit corps plat (29) à la position qui précède la coupe.
